# EUROPEAN PATENT APPLICATION

(11) **EP 4 629 429 A1**
(43) Date of publication of application: **08.10.2025**
(21) Application number: 25160984.8
(22) Date of filing: 28.02.2025
(51) Int. Cl.: H01M 50/503, H01M 50/505, H01M 50/516, H01M 50/528, H01M 50/55, H01M 50/553

(54) **BATTERY MODULE**

(30) Priority: 11.03.2024 KR 20240034111
(71) Applicant: SAMSUNG SDI CO., LTD., Yongin-si, Gyeonggi-do 17084 (KR)
(72) Inventor: PARK, SOOHWAN, 17084 Yongin-si, Gyeonggi-do (KR); LEE, CHOONGHOON, 17084 Yongin-si, Gyeonggi-do (KR); AHN, GI JANG, 17084 Yongin-si, Gyeonggi-do (KR)
(74) Representative: Gulde & Partner

(57) **Abstract**

A battery module (100, 200) includes a plurality of battery cells (10) with protruding terminal parts (11) that include a first electrode terminal (11a) and a second electrode terminal. A frame part (20) accommodates the plurality of battery cells (10), and busbars (30) are electrically connected to the terminal parts (11) of the plurality of battery cells (10). Each of the busbars (30) is formed with insertion holes into which the terminal parts (11) are inserted.

## Description

### BACKGROUND

### (a) Field

The present disclosure relates to a battery module capable of reducing heat generation by having a reduced height.

### (b) Description of the Related Art

Secondary batteries are widely used in mobile devices, auxiliary power devices, or the like. In addition, secondary batteries are also attracting attention as a main power source for electric vehicles, hybrid electric vehicles, and plug-in hybrid electric vehicles, which have been proposed to solve various problems such as air pollution from conventional gasoline or diesel vehicles.

However, due to the need for high-output, large-capacity batteries in electric vehicles, battery modules are used in which multiple battery cells are stacked and then electrically connected in series and parallel. Each battery module includes a plurality of stacked battery cells, and terminals exposed at both ends of each battery cell are electrically connected to provide high voltage.

While the battery modules are being manufactured in a variety of methods and pack housing sizes to match shape and pack capacity, current packs have limitations in terms of scalability, serviceability, and recycling. Further, when using a plurality of conventional unit battery cells, the battery pack requires a structure capable of effectively dissipating heat generated during charging and discharging in order to provided high output.

### SUMMARY OF THE DISCLOSURE

The present provides a battery module that is electrically connected with a part of an electrode terminal inserted into the inside of a busbar, and a portion where the electrode terminal is welded to the busbar is an edge part of the electrode terminal, thereby reducing heat generation.

The battery module according to an embodiment includes a plurality of battery cells that each include protruding terminal parts, with the terminal parts including a first electrode terminal and a second electrode terminal, and busbars electrically connected to the terminal parts of the plurality of battery cells, wherein an insertion hole is formed in each of the busbars, and the terminal parts are inserted into the insertion holes.

The battery module may further include a frame part accommodating the plurality of battery cells.

The insertion hole formed in each of the busbars may include a first insertion hole into which one of the first electrode terminals may be inserted and electrically connected, and may include a second insertion hole into which one of the second electrode terminals may be inserted and electrically connected.

Each of the busbars may include a first connection piece having the first insertion hole formed therein and through which the first electrode terminal may be inserted and electrically connected, and may include a second connection piece extending at a side of the first connection piece, the second connection piece may have the second insertion hole formed therein and through which the second electrode terminal of the battery cell may be inserted and electrically connected.

A bending part may be formed between the first connection piece and the second connection piece in each of the busbars.

A through hole may be formed in the bending part.

A plurality of through holes may be formed in the bending part between the first connection piece and the second connection piece.

The plurality of through holes may include a first through hole formed in the bending part between the first connection piece and the second connection piece, and a second through hole may be formed in the bending part at a position spaced from the first through hole.

The first and second through holes may be formed such that lengths of the first and second through holes extend between the first connection piece and the second connection piece.

The first and second electrode terminals may be electrically connected by welding while inserted into the first and second insertion holes.

Inlet grooves may be formed on interior walls of at least one of the first insertion hole and the second insertion hole.

Insertion protrusions inserted into the inlet groove may protrude from side surfaces of the first electrode terminal and the second electrode terminal.

An edge part of the first electrode terminal of a first battery cell of the plurality of battery cells may be welded to one of the busbars, and an edge part of the second electrode terminal of a second battery cell of the plurality of battery cells may be welded to the one busbar.

The first insertion hole may be formed in a first connection piece of one of the busbars, and the second insertion hole may be formed in a second connection piece of the one busbar, and the first connection piece and the second connection piece may be connected by a bending part of the one busbar.

An edge part of the first electrode terminal of a first battery cell of the plurality of battery cells may be welded to the first connection piece of the one busbar, and an edge part of the second electrode terminal of a second battery cell of the plurality of battery cells may be welded to the second connection piece of the one busbar.

The first electrode terminal of each of the battery cells may be electrically connected to one of the busbars with the first electrode terminal being inserted into the first insertion hole of one of the busbar, and the second electrode terminal of each of the battery cells is electrically connected to another of the busbars with the second electrode terminal being inserted into the second insertion hole of the another of the busbars.

According to another embodiment, a battery module may include a first battery cell including an electrode terminal, a second battery cell including an electrode terminal, and a busbar with first and second insertion holes formed therein, with the electrode terminal of the first battery cell being positioned in the first insertion hole of the busbar and the terminal part of the of the second battery cell being positioned in the second insertion hole of the busbar.

An edge part of the electrode terminal of the first battery cell may be welded to the busbar, and an edge part of the electrode terminal of the second battery cell may be welded to the busbar.

The first insertion hole may be formed in a first connection piece of the busbar, and the second insertion hole may be formed in a second connection piece of the busbar, and the first connection piece and the second connection piece may be connected by a bendable part of the busbar.

An edge part of the electrode terminal of the first battery cell may be welded to the first connection piece of the busbar, and an edge part of the electrode terminal of the second battery cell may be welded to the second connection piece of the busbar.

According to a further embodiment, a battery module may include a plurality of battery cells, each of the battery cells including first and second electrode terminals, a plurality of busbars, each of the plurality of busbars having first and second insertion holes formed therein, with the first electrode terminal of each of the battery cells being electrically connected to one of the busbars with the first electrode terminal being inserted into the first insertion hole of one of the busbars, and the second electrode terminal of each of the battery cells being electrically connected to another of the busbars with the second electrode terminal being inserted into the second insertion hole of the another of the plurality of busbars.

An edge part of each of the first electrode terminals may be welded to the busbar having the first insertion hole that receives the first electrode terminal, and an edge part of each of the second electrode terminals may be welded to the busbar having the second insertion hole that received the second electrode terminal.

Each of the first insertion holes may be formed in a first connection piece of the busbar, and each of the second insertion holes may be formed in a second connection piece of the busbar, and the first connection piece and the second connection piece may be connected by a bendable part of the busbar.

An edge part of each of the first electrode terminals may be welded to the first connection piece of the busbar having the first insertion hole that receives the first electrode terminal, and an edge part of each of the second electrode terminals may be welded to the second connection piece of the busbar having the second insertion hole that receives the second electrode terminal.

According to an embodiment of the present disclosure, a part of the electrode terminal is electrically connected by welding while it is inserted into an insertion hole formed in the busbar. Accordingly, the part where the electrode terminal and the busbar are welded is an edge part of the electrode terminal, thereby allowing current to flow along the edge part of the electrode terminal, and, thus, reducing heat generation in the busbar.

According to an embodiment of the present disclosure, a part of the electrode terminal is electrically connected by welding while it is inserted into an insertion hole formed in the busbar, and, thus, the overall height of the battery module is reduced, thereby increasing the cell capacity because of an increase in the amount of power per unit volume.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

FIG. 1 is a perspective view schematically illustrating a battery module according to an embodiment of the present disclosure.
FIG. 2 is a perspective view of the main part schematically illustrating a state in which a busbar is connected to the battery cell of FIG. 1.
FIG. 3 is a perspective view of the main part schematically illustrating a state in which the electrode terminal of FIG. 1 is inserted into the busbar and connected.
FIG. 4 is a perspective view schematically illustrating a busbar according to an embodiment of the present disclosure.
FIG. 5 is a side view schematically illustrating the busbar of FIG. 4.
FIG. 6 is a side view of the main part schematically illustrating a state in which an electrode terminal is connected to the busbar of FIG. 4.
FIG. 7 is a perspective view of the main part schematically illustrating a state in which an electrode terminal of a battery module according to a second embodiment of the present disclosure is inserted into the busbar and connected.
FIG. 8 is a perspective view schematically illustrating the busbar of FIG. 7.

### DETAILED DESCRIPTION OF THE EMBODIMENTS

The present disclosure will be described more fully hereinafter with reference to the accompanying drawings, in which exemplary embodiments of the disclosure are shown. As those skilled in the art would realize, the described embodiments may be modified in various different ways without departing from the technical scope of the present disclosure. The drawings and description are to be regarded as illustrative in nature and not restrictive. Like reference numerals designate like elements throughout the specification.

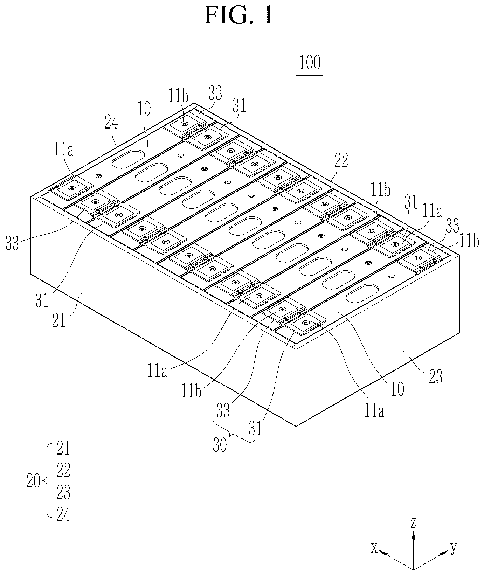

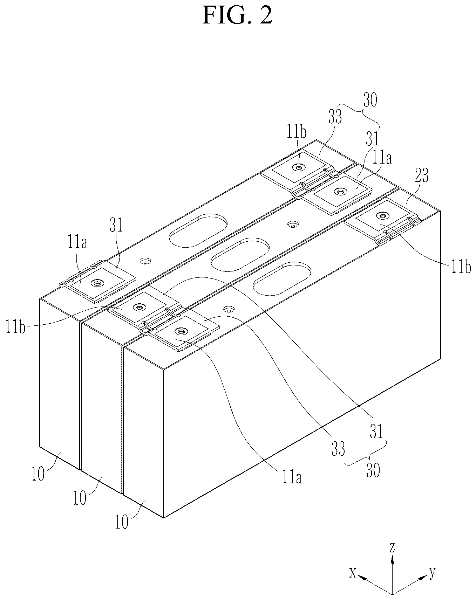

FIG. 1 is a perspective view schematically illustrating a battery module according to an embodiment of the present disclosure, and FIG. 2 is a perspective view of the main part schematically illustrating a state in which a busbar is connected to the battery cell of FIG. 1.

As shown in FIGS. 1 and 2, a battery module 100 according to an embodiment of the present disclosure includes a plurality of battery cells 10 with protruding terminal parts 11 including a first electrode terminal 11a and a second electrode terminal 11b, a frame part 20 accommodating the plurality of battery cells 10, and busbars 30 electrically connected to the terminal parts 11 of the plurality of battery cells 10. The busbars 30 are formed with insertion holes 21a and 23a into which the terminal parts 11 are inserted.

The frame part 20 may include a first side frame 21 supporting one side surface of the plurality of battery cells 10, a second side frame 22 supporting the other side surface of the plurality of battery cells 10, a first end frame 23 with ends that are connected to ends of the first side frame 21 and the second side frame 22, and a second end frame 24 with ends that are connected to each end of the first side frame 21 and the second side frame 22.

The first side frame 21 may be installed to support one side of the plurality of battery cells 10. The second side frame 22 may be installed to support the other side of the plurality of battery cells 10. The first end frame 23 may be installed to connect one end of each of the first side frame 21 and the second side frame 22. That is, one end of the first end frame 23 may be connected to one end of the first side frame 21 by a fastening member, and the other end of the first end frame 23 may be connected to one end of the second side frame 22 by the fastening member.

The second end frame 24 may be installed to connect the other ends of the first side frame 21 and the second side frame 22. That is, one end of the second end frame 24 may be connected to the other end of the first side frame 21 by the fastening member, and the other end of the second end member 24 may be connected to the other end of the second side frame 22 by the fastening member.

The battery cells 10 may be inserted into the frame part 20 in plural numbers arranged adjacent to each other in the first direction (x-axis direction). Each of the battery cells 10 has the terminal part 11 including a first electrode terminal 11a and a second electrode terminal 11b projecting upwardly. The terminal parts 11 of neighboring battery cells 10 may be electrically connected to each other by the busbars 30. Each terminal part 11 may be electrically connected to one of the busbars 30 with a part inserted into the busbar 30. As such, a part of the terminal part 11 is inserted into the busbar 30 so that a part where the terminal part 11 and the busbar 30 are welded is changed to an edge part of the terminal part, allowing current to flow along the edge part of the electrode terminal, thereby reducing heat generation in the busbar 30.

In addition, a part of the terminal part 11 is inserted into the busbar 30 to reduce the overall height of the battery module 100, thereby enabling the implementation of the battery module 100 with a relatively low height. This will be described in detail below while describing the busbar 30.

Each busbar 30 electrically connects the plurality of battery cells 10 to each other and may include a first insertion hole 31a into which the first electrode terminal 11a is inserted and electrically connected, and a second insertion hole 33a into which the second electrode terminal 11b is inserted and electrically connected.

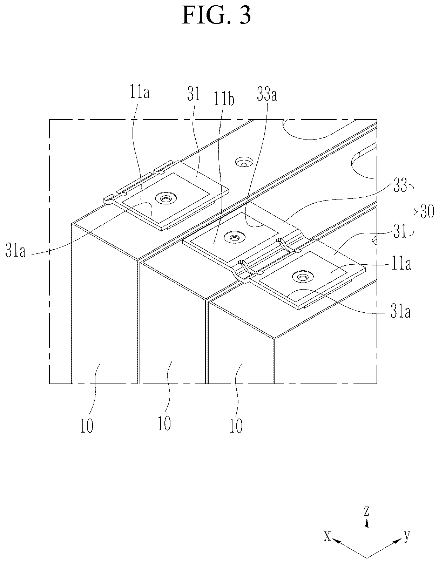

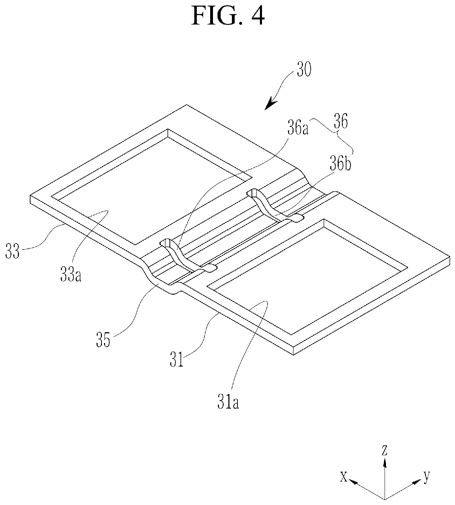

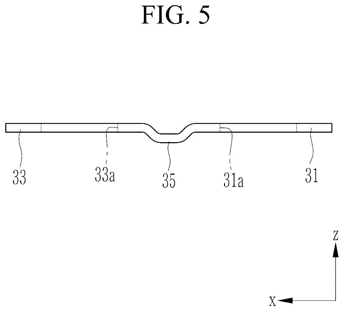

FIG. 3 is a perspective view of the main part schematically illustrating a state in which the electrode terminal of FIG. 1 is inserted into the busbar and connected, FIG. 4 is a perspective view schematically illustrating a busbar according to an embodiment of the present disclosure, and FIG. 5 is a side view schematically illustrating the busbar of FIG. 4.

Referring to FIGS. 3 to 5, each busbar 30 may include a first connection piece 31 having the first insertion hole 31a through which a first electrode terminal 11a of a battery cell 10 is inserted and electrically connected. Each busbar 30 may further include a second connection piece 33 extending to a side surface of the first connection piece 31 and having the second insertion hole 33a through which a second electrode terminal 11b of a battery cell 10 is inserted and electrically connected.

The first connection piece 31 and the second connection piece 33 are connected to electrically connect a pair of adjacent battery cells 10 to each other, and the connection pieces 31 and 33 may be formed in the same or similar shapes and connected to each other.

The first connection piece 31 may have a substantially rectangular or square shape, and the first insertion hole 31a through which the first electrode terminal 11a is inserted and electrically connected is formed in the first connection piece 31. The first insertion hole 31a may be formed through the first connection piece 31 in a shape corresponding to the shape of the first electrode terminal 11a. That is, the first insertion hole 31a may be formed in a rectangular shape corresponding to the shape of the first electrode terminal 11a, which is rectangular in the depicted embodiment. If the first electrode terminal 11a is changed to a round shape, the first insertion hole 31a may also be changed to a corresponding round shape.

The first electrode terminal 11a may be electrically connected to the bust bar 30 by welding while insert in the first insertion hole 31a. That is, the first electrode terminal 11a may be electrically connected to the first connection piece 31 by butt welding while inserted into the first insertion hole 31a.

The second connection piece 33 is connected to the side surface of the first connection piece 31 and may be electrically connected to the second electrode terminal 11b of the adjacent battery cell 10. The second connection piece 33 may have a substantially rectangular or square shape, and the second insertion hole 33a may be formed therein into which the second electrode terminal 11b is inserted and electrically connected. The second insertion hole 33a may be formed in a shape corresponding to the shape of the second electrode terminal 11b. That is, the second insertion hole 33a may be formed through the second electrode terminal 11b in a rectangular shape corresponding to the shape of the second electrode terminal 11b, which is rectangular in shape in the depicted embodiment. If the second electrode terminal 11a is changed to a round shape, the first insertion hole 31a may also be changed to a corresponding round shape.

The second electrode terminal 11b may be electrically connected by welding while inserted in the second insertion hole 33a. That is, the second electrode terminal 11b may be electrically connected to the second connection piece 33 by butt welding while inserted into the second insertion hole 33a.

Thus, the first and second connection pieces 31 and 33 and the first and second electrode terminals 11a and 11b are connected by welding, and, in particular, may be electrically connected to each other by butt welding in the present embodiment.
The first connection piece 31 and the second connection piece 33 may be connected by a bending part 35. One side of the bending part 35 may be connected to the edge of the first connection piece 31, and the other side of the bending part 35 may be connected to one side of the second connection piece 33. The central part of the bending part 35 may be bent into a round shape toward the battery cell 10.

The bending part 35 has an area smaller than the area of the first connection piece 31 or the area of second connection piece 33. The bending part 35 may connect the first connection piece 31 and the second connection piece 33 in a bent state. As such, the formation of the bending part 35 between the first connection piece 31 and the second connection piece 33 allows for elastic deformation by the bending shape during the process of connecting the first and second connection pieces 31 and 33 to each of the first and second electrode terminals 11a and 11b. Thus, a smoother connection is possible.

It is also possible for one or more through holes 36 to be formed in the bending part 35. In particular, a plurality of through holes 36 may be formed in the bending part 35. The through holes 36 allow for smoother elastic deformation of the bending part 35 during the process of connecting the busbar 30 to the first and second electrode terminals 11a and 11b. The through hole 36 may include a first through hole 36a formed in the bending part 35 between the first connection piece 31 and the second connection piece 33, and a second through hole 36b formed between the first connection piece 31 and the second connection piece 33 in the bending part 35 at a position spaced apart from the first through hole 36a.

The first through hole 36a may be formed through the bending part 35 with a long length toward the first connection piece 31 and the second connection piece 33.

The first through hole 36a may be formed in a long hole shape between the first connection piece 31 and the second connection piece 33. The first through hole 36a thereby allows for easier elastic deformation of the bending part 35 in the process of connecting the first connection piece 31 and the second connection piece 33 to the first electrode terminal 11a and the second electrode terminal 11b, respectively. Thus, the first through hole 36a improves the flexibility of the connection between the busbar 30 to the terminal part 11.

The second through hole 36b has the same or similar shape as the first through hole 36a, and the second through hole 36b may be formed in the bending part 35 at a position spaced apart from the position where the first through hole 36a is formed. The second through hole 36b may be formed through the bending part 35 with a long length toward the first connection piece 31 and the second connection piece 33. The second through hole 36b may be formed in a long hole shape between the first connection piece 31 and the second connection piece 33. The second through hole 36b therefore has a similar effect to that of the first through hole 36a in allowing for easier elastic deformation of the bending part 35 in the process of connecting the first connection piece 31 and the second connection piece 33 to the first electrode terminal 11a and the second electrode terminal 11b, respectively. Thus, the second through hole 36b improve the flexibility of the connection between the busbar 30 to the terminal part 11.

The first and second through holes 36a and 36b are as having the same or similar shapes, but the disclosure not necessarily limited thereto, as the through holes 36a and 36b may have different shapes.

As described above, the battery module 100 of the present embodiment may be electrically connected by welding, with parts of the first and second electrode terminals 11a and 11b inserted into the first and second insertion holes 31a and 33a formed in each of the first and second connection pieces 31 and 33 of the busbar 30. Accordingly, the part where the terminal part 110 and the busbar are welded is an edge portion of the terminal part, allowing current to flow to the busbar 30 along the edge part of the electrode terminal, thereby reducing heat generation in the busbar 30. In addition, the height from the bottom of the battery cell 10 of the battery module 100 to the top of the busbar 30 is reduced. Further, the amount of power per unit volume of the battery module 100 may be increased, thereby increasing the capacity of the battery cell in the battery module.

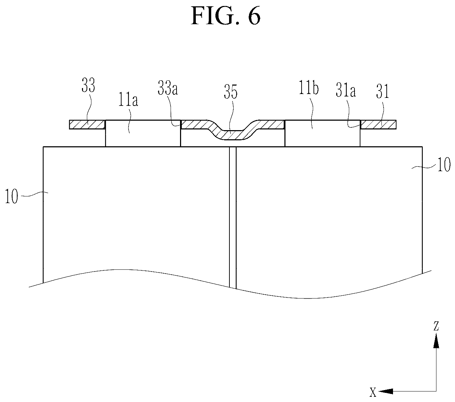

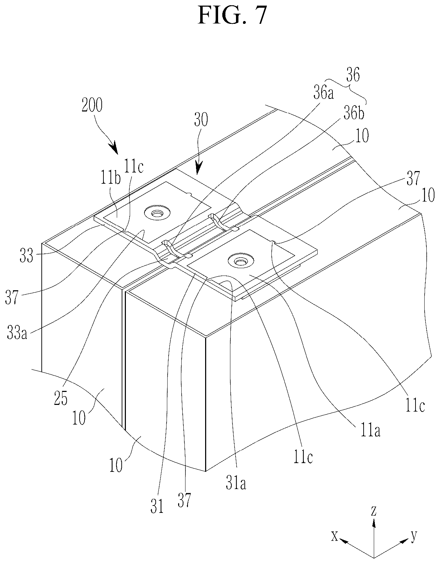

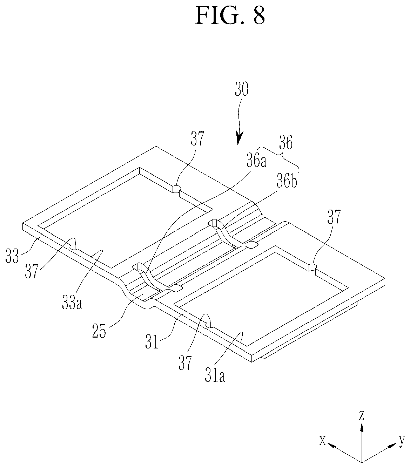

FIG. 7 is a perspective view schematically illustrating a state in which the electrode terminal of the battery module according to the second embodiment of the present disclosure is inserted into the busbar and connected, and FIG. 8 is a perspective view schematically illustrating the busbar of FIG. 7. The same reference numbers as in FIGS. 1 to 6 refer to the same or similar members with the same or similar functions. Thus, detailed descriptions of the same reference numbers will be omitted.

As shown in FIGS. 7 and 8, the busbar 30 of the battery module 200 according to the second embodiment of the present disclosure may include the first connection piece 31 having the first insertion hole 31a through which the first electrode terminal 11a of the battery cell 10 is inserted and electrically connected. The busbar 30 may also include the second connection piece 33 extending to the side of the first connection piece 31 and having the second insertion hole 33a through which the second electrode terminal 11b of the battery cell 10 is inserted and electrically connected.

Inlet grooves 37 may be formed on interior walls of the first insertion hole 31a and the second insertion hole 33a. A plurality of the inlet grooves 37 may be formed in each of the first insertion hole 31a and the second insertion hole 33a. Insertion protrusions 11c protruding from side surfaces of the first electrode terminal 11a and the second electrode terminal 11b may be inserted into the inlet grooves 37. In particular, one of the insertion protrusions 11c is inserted into the inlet groove 37 formed in each of the first and second insertion holes 31a and 33a, and the insertion protrusions 11c may be inserted in a press-fitted state into the first and second insertion holes 31a and 33a. Thus, the busbar 30 may be more stably fixed to the first and second electrode terminals 11a and 11b.

While this disclosure has been described in connection with what is presently considered to be practical embodiments, it is to be understood that the disclosure is not limited to the disclosed embodiments. The disclosure covers various modifications and equivalent arrangements, and it will be understood by those of skill in the art that various changes in form and details may be made without departing from the scope of the present invention as defined in the appended claims.

**<Description of symbols>**

| | | | |
|---|---|---|---|
| 10 | Battery cell | 11 | Terminal part |
| 11a | First electrode terminal | 11b | Second electrode terminal |
| 20 | Frame part | 21 | First side frame |
| 22 | Second side frame | 23 | First end frame |
| 24 | Second end frame | 30 | Busbar |
| 31 | First connection piece | 31a | First insertion hole |
| 33 | Second connection piece | 33a | Second insertion hole |
| 35 | Bending part | 36 | Through hole |
| 36a | First through hole | 36b | Second through hole |

## Claims

1. A battery module (100, 200) comprising:
a plurality of battery cells (10) that each include protruding terminal parts (11), the terminal parts (11) each include a first electrode terminal (11a) and a second electrode terminal (11b); and
busbars (30) electrically connected to the terminal parts (11) of the plurality of battery cells (10),
wherein an insertion hole (31a, 33a) is formed in each of the busbars (30), and the terminal parts (11) are inserted into the insertion holes (31a, 33a).

2. The battery module (100, 200) as claimed in claim 1, wherein the insertion hole (31a, 33a) formed in each of the busbars (30) includes a first insertion hole (31a) into which one of the first electrode terminals (11a) is inserted and electrically connected, and a second insertion hole (33a) into which one of the second electrode terminals (11b) is inserted and electrically connected.

3. The battery module (100, 200) as claimed in claim 2, wherein each of the busbars (30) comprises:
a first connection piece (31) having the first insertion hole (31a) formed therein and through which the first electrode terminals (11a) is inserted and electrically connected; and
a second connection piece (33) extending at a side of the first connection piece (31), the second connection piece (33) having the second insertion hole (33a) formed therein and through which the second electrode terminal (11b) of the battery cell (10) is inserted and electrically connected.

4. The battery module (100, 200) as claimed in claim 3, wherein a bending part (35) is formed between the first connection piece (31) and the second connection piece (33) in each of the busbars (30).

5. The battery module (100, 200) as claimed in claim 4, wherein a through hole (36) is formed in the bending part (35).

6. The battery module (100, 200) as claimed in claim 4, wherein a plurality of through holes (36) is formed in the bending part (35) between the first connection piece (31) and the second connection piece (33).

7. The battery module (100, 200) as claimed in claim 6, wherein the plurality of through holes (36) comprises:
a first through hole (36a) formed in the bending part (35) between the first connection piece (31) and the second connection piece (33); and
a second through hole (36b) formed in the bending part (35) at a position spaced from the first through hole (36a).

8. The battery module (100, 200) as claimed in claim 7, wherein the first and second through holes (36a, 36b) are formed such that a length of the first and second through holes (36a, 36b) extends between the first connection piece (31) and the second connection piece (33).

9. The battery module (100, 200) as claimed in any one of claims 2 to 8, wherein the first and second electrode terminals (11a, 11b) are electrically connected by welding while being inserted into the first and second insertion holes (31a, 33a).

10. The battery module (100, 200) as claimed in any one of claims 2 to 9, wherein inlet grooves (37) are formed on interior walls of the first insertion hole (31a) and the second insertion hole (33a).

11. The battery module (100, 200) as claimed in claim 10, wherein insertion protrusions (11c) protrude from side surfaces of the first electrode terminal (11a) and the second electrode terminal (11b), and each of the insertion protrusions (11c) is inserted into one of the inlet grooves (37).

12. A battery module (100, 200) as claimed in claim 1, wherein an edge part of the first electrode terminal (11a) of a first battery cell (10) of the plurality of battery cells (10) is welded to one of the busbars (30), and an edge part of the second electrode terminal (11b) of a second battery cell (10) of the plurality of battery cells (10) is welded to the one busbar (30).

13. A battery module (100, 200) as claimed in claim 2, wherein the first insertion hole (31a) is formed in a first connection piece (31) of one of the busbars (30), and the second insertion hole (33a) is formed in a second connection piece (33) of the one busbar (30), and
wherein the first connection piece (31) and the second connection piece (33) are connected by a bending part (35) of the one busbar (30).

14. A battery module as claimed in claim 13, wherein an edge part of the first electrode terminal (11a) of a first battery cell (10) of the plurality of battery cells (10) is welded to the first connection piece (31) of one of the busbars (30), and an edge part of the second electrode terminal (11b) of a second battery cell (10) of the plurality of battery cells (10) is welded to the second connection piece (33) of the one busbar (30).

15. A battery module (100, 200) as claimed in claim 2, wherein the first electrode terminal (11a) of each of the battery cells (10) is electrically connected to one of the busbars (30) with the first electrode terminal (11a) being inserted into the first insertion hole (31a) of one of the busbars (30), and
wherein the second electrode terminal (11b) of each of the battery cells (10) is electrically connected to another of the busbars (30) with the second electrode terminal (11b) being inserted into the second insertion hole (33a) of the another of the busbars (30).
